(19) Europäisches Patentamt

European Patent Office

Office européen des brevets

(11) EP 1 526 534 A2

(12) **EUROPEAN PATENT APPLICATION**

(43) Date of publication:
    **27.04.2005 Bulletin 2005/17**

(51) Int Cl.⁷: **G11B 20/18**

(21) Application number: **04013960.2**

(22) Date of filing: **15.06.2004**

(84) Designated Contracting States:
    **AT BE BG CH CY CZ DE DK EE ES FI FR GB GR
    HU IE IT LI LU MC NL PL PT RO SE SI SK TR**
    Designated Extension States:
    **AL HR LT LV MK**

(30) Priority: **22.10.2003 KR 2003073616**

(71) Applicant: **Daewoo Electronics Corporation
    Seoul (KR)**

(72) Inventor: **Park, Joo-Youn
    Seoul (KR)**

(74) Representative: **Jacoby, Georg, Dr. et al
    Samson & Partner,
    Widenmayerstrasse 5
    80538 München (DE)**

(54) **Holographic rom disk having multiple error correction code rates**

(57)     A bare type holographic ROM disk is easily contaminated with a fingerprint of a user. Specifically, a radially outer surface of the disk has a higher contaminant level to be more contaminated than a radially inner surface thereof. An error correction capability on the radially outer surface can be increased by applying an error correction code having a larger parity on the radially outer surface.

## FIG.3

**Description**

The present invention relates to a holographic read only memory (ROM) disk; and, more particularly, to a bare type holographic ROM disk having multiple error correction code rates therein.

Since a demand for an optical storage system that may store a large amount of data for, e.g., a motion picture film, has increased, a holographic read only memory (ROM) system, e.g., a holographic digital data storage system incorporating therein a holographic ROM disk, has been recently developed for realizing high density optical storage capabilities.

In the holographic ROM system, an interference pattern is recorded on a bare type holographic ROM disk with no cartridge. Specifically, a reference beam and a modulated signal beam modulated with data are illuminated on the holographic ROM disk so that the interference pattern therebetween is recorded on the holographic ROM disk. Then, a reconstructing reference beam having a wavelength equal to that of the reference beam is illuminated on the interference pattern in the holographic ROM disk to reconstruct the data recorded therein.

However, when a user mounts the bare type holographic ROM disk on the holographic ROM system or handles the bare type holographic ROM disk, it is probable that the bare type holographic ROM disk is easily contaminated with, e.g., a fingerprint of the user. Specifically, a radially outer surface may be more easily contaminated by a contaminant, e.g., the fingerprint of the user, than a radially inner surface.

In order to prevent a data reconstruction reliability from being deteriorated, an error correction code (ECC) is used to record the data on the holographic ROM system.

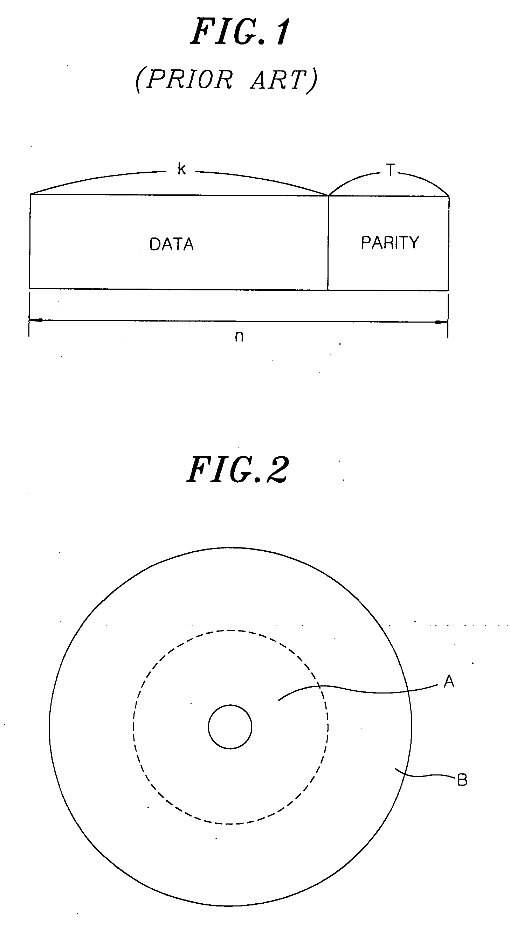

A conventional structure of the ECC will be described with reference to Fig. 1.

Generally, one or more parity symbols are added to one or more data symbols so that codeword symbols made of the data symbols and the parity symbols may be used to modulate the signal beam as a modulated signal beam to be stored on the holographic ROM disk. Through a reconstruction process of the modulated signal beam, the codeword symbols having the data symbols and the parity symbols are retrieved from the holographic ROM disk and, then, any errors in the data symbols may be corrected by manipulating the parity symbols.

A Reed-Solomon (RS) code is generally used as the conventional error correction code. As shown in Fig. 1, n codeword symbols include k data symbols and T parity symbols. A code rate k/n is defined as a ratio k/n of the number of bits of the data symbols to that of the codeword symbols while an error correction capability is defined as follows:

$$t = \frac{T}{2} = \frac{n - k}{2}$$

wherein each symbol generally has 8-bits.

For example, when a RS(255,223) code made of 255 codeword symbols having 223 data symbols is used, the error correction capability is calculated as 16 symbols, i.e., 16 bytes.

However, the conventional error correction code described above has a same structure regardless of a radially inner surface and a radially outer surface.

Althouth a contaminant level of the radially outer surface is different from, e.g., greater than that of the radially inner surface, the same error correction code is applied on both the radially inner surface and the radially outer surface in the conventional holographic ROM disk. Accordingly, since the error correction capability on the radially outer surface which is more frequently exposed to fingerprints of the user than the radially inner surface exceeds a predetermined level, a data reconstruction reliability is rapidly deteriorated and, further, the stored data may not be reconstructed if any.

It is, therefore, an object of the present invention to provide a holographic ROM disk havig multiple error correction code rates based on a contaminant level, therby improving a data reconstruction efficiency.

In accordance with a preferred embodiment of the present invention, there is provided a holographic ROM disk including: N-segmented storage portions, N being a positive integer larger than 1, which are divided based on a contamination level thereof, wherein an error correction capability in each of the N-segmented storage portions depends on the contamination level.

The above and other objects and features of the present invention will become apparent from the following description of preferred embodiments given in conjunction with the accompanying drawings, in which:

> Fig. 1 illustrates a conventional structure of an error correction code of the bare type holographic ROM disk;
> Fig. 2 shows a top view of a structure of a bare type holographic ROM disk in accordance with a preferred embodiment of the present invention; and
> Fig. 3 provides a structure of an error correction code in accordance with the preferred embodiment of the present invention.

A preferred embodiment of the present invention will now be described in detail with reference to the accompanying drawings, wherein like reference numerals appearing in the drawings represent like parts.

As shown in Fig. 2, it is assumed that a bare type holographic ROM disk is divided into two segments, i.e., a radially inner surface A near a center of the disk and a radially outer surface B far therefrom. In general, since the radially outer surface B is more exposed to contaminants such as fingerprints, a contaminant level in the disk may increase in proportion to a distance from a center of the disk. Therefore, the radially inner surface A has a relatively lower contaminant level to be less contaminated with fingerprints so that a first error correction code having a larger code rate and a smaller parity may be used to record data on the radially inner surface A. On the contrary, the radially outer surface B has a relatively higher contaminant level to be more contaminated with the fingerprints so that a second error correction code having a smaller code rate and a larger parity may be used to record data on the radially outer surface B, thereby improving a reconstruction efficiency of the data.

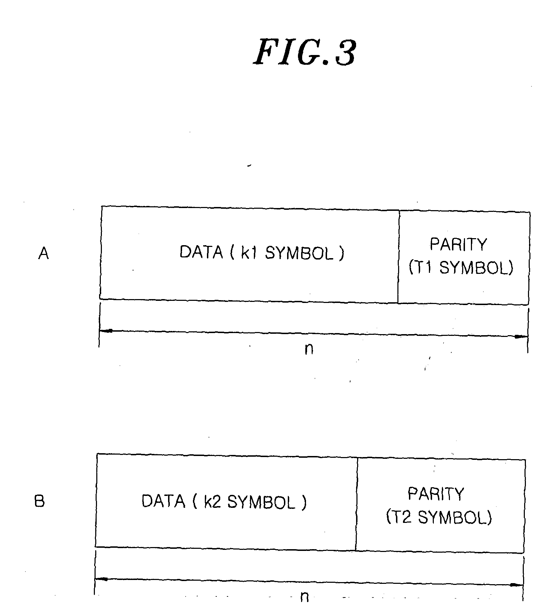

Referring to Fig. 3, there is shown a structure of an error correction code in accordance with the preferred embodiment of the present invention. In case the second error correction code with n codeword symbols of k2 data symbols and T2 parity symbols is used on the radially outer surface B, the T2 parity symbols is increased and the k2 data symbols is decreased so that a code rate k2/n may be reduced while an error correction capability $(\frac{n - k2}{2})$ can be improved.

Contrarily, in case the first error correction code with n codeword symbols of k1 data symbols and T1 parity symbols is used on the radially inner surface A, T1 parity symbols is decreased and k1 data symbols is increased so that a code rate (k1/n) may be improved while an error correction capability $(\frac{n - k1}{2})$ may be reduced.

In brief, the number of the T2 parity symbols used on the radially outer surface B is larger than that of the T1 parity symbols used on the radially inner surface A, but the number of the k2 data symbols used on the radially outer surface B is smaller than that of the k1 data symbols used on the radially inner surface A. The error correction code having the multiple error correction code rates is applied on the bare type holographic ROM disk so that a higher data reconstruction reliability may be obtained on the radially inner surface A, i.e., a surface to be less contaminated, as well as the radially outer surface B, i.e., a surface to be more contaminated.

Generally, a storage surface of the holographic ROM disk may be divided into N-segmented storage portions based on a contamination level thereof to be contaminated. A portion among the N-segmented storage portions having a highest contamination level is recorded by using an error correction code having a smallest code rate and a largest number of parities. As the contamination level decreases, another error correction code may be used, wherein the code rate thereof is increased by a predetermined interval and the number of parities is decreased by a predetermined interval.

Here, the Reed-Solomon code is used as the error correction code, but any error correction code may be applied to the present invention.

While the number of codeword symbols applied to the radially inner surface A is identical to that of codeword symbols applied to the radially outer surface B in the preferred embodiment, it is not limited thereto. The number of codeword symbols applied to the radially inner surface A may be different from that of codeword symbols applied to the radially outer surface B. In such case, a rate of the parity symbols to the data symbols in the storage surface of the holographic ROM disk is dependent on a contamination level thereof. In other words, the more contaminated is the storage surface, the higher rate of the parity symbols to the data symbols is used to improve the data reconstruction efficiency.

While the invention has been shown and described with respect to the preferred embodiment, it will be understood by those skilled in the art that various changes and modifications may be made without departing from the scope of the invention as defined in the following claims.

**Claims**

1.  A holographic ROM disk comprising:

    N-segmented storage portions, N being a positive integer larger than 1, which are divided based on a contamination level thereof,

    wherein an error correction capability in each of the N-segmented storage portions depends on the contamination level.

2.  The holographic ROM disk of claim 1, wherein the error correction capability is substantially proportional to the contamination level of said each of the N-segmented storage portions.

3.  The holographic ROM disk of claim 2, wherein the contamination level of a radially outer storage portion is larger than that of a radially inner storage portion so that the error correction capability of the radially outer storage portion is larger than that of the radially inner storage portion.

4.  The holographic ROM disk of claim 3, wherein the N is two.

5.  The holographic ROM disk of claim 4, wherein a Reed-Solomon code is used as an error correction code with the error correction capability.

# FIG.1

## (PRIOR ART)

# FIG.2

# FIG.3

A

| DATA ( k1 SYMBOL ) | PARITY (T1 SYMBOL) |
|---|---|

$\longleftarrow$ n $\longrightarrow$

B

| DATA ( k2 SYMBOL ) | PARITY (T2 SYMBOL) |
|---|---|

$\longleftarrow$ n $\longrightarrow$